(19) **Europäisches Patentamt**
**European Patent Office**
**Office européen des brevets**

(11) **EP 2 011 401 B2**

(12) **NEW EUROPEAN PATENT SPECIFICATION**
After opposition procedure

(45) Date of publication and mention
of the opposition decision:
**07.09.2022 Bulletin 2022/36**

(45) Mention of the grant of the patent:
**20.07.2016 Bulletin 2016/29**

(21) Application number: **07741567.7**

(22) Date of filing: **13.04.2007**

(51) International Patent Classification (IPC):
**A23C 9/12** (2006.01)    **A23C 7/04** (2006.01)
**A23C 9/123** (2006.01)

(52) Cooperative Patent Classification (CPC):
**A23C 9/1307; A23C 7/04; A23C 9/123;**
**A23L 33/20;** A23C 2240/20

(86) International application number:
**PCT/JP2007/058131**

(87) International publication number:
**WO 2007/119810 (25.10.2007 Gazette 2007/43)**

(54) **HIGH-SNF AND/OR LOW-FAT FERMENTED MILK EXCELLENT IN SAVOR AND PROCESS FOR PRODUCTION THEREOF**

FERMENTIERTE MILCH MIT HOHEM SNF- UND/ODER NIEDRIGEM FETTGEHALT MIT AUSGEZEICHNETEM GESCHMACK UND VERFAHREN ZU IHRER HERSTELLUNG

LAIT FERMENTÉ À TENEUR ÉLEVÉE EN MATIÈRES SÈCHES NON GRASSES ET/OU À FAIBLE TENEUR EN MATIÈRES GRASSES, PRÉSENTANT UN GOÛT EXCELLENT, ET PROCÉDÉ DE PRODUCTION DE CELUI-CI

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **13.04.2006 JP 2006110605**

(43) Date of publication of application:
**07.01.2009 Bulletin 2009/02**

(73) Proprietor: **Meiji Co., Ltd.**
**Chuo-ku**
**Tokyo 104-8306 (JP)**

(72) Inventors:
• **HORIUCHI, Hiroshi**
**Odawara-shi, Kanagawa 250-0862 (JP)**
• **YANO, Akira**
**Tokorozawa-shi Saitama 259-1127 (JP)**
• **INOUE, Nobuko**
**Odawara-shi, Kanagawa 250-0862 (JP)**

(74) Representative: **TBK**
**Bavariaring 4-6**
**80336 München (DE)**

(56) References cited:
**WO-A1-2005/120240       JP-A- 2003 250 482**
**JP-A- 2005 176 603       JP-A- 2005 348 703**
**JP-A- 2007 104 995**

• **'Teishibo no LG21 Nyusankin Haigo Yogurt' THE CHEMICAL DAILY CO., LTD. 12 April 2006, page 5, XP003018276**
• **'Teishibo no Probio Yogurt' KUMAMOTO NICHINICHI SHINBUN 24 March 2006, page 7, XP003018277**
• **'Shin Gijutsu Shokuhin Kaihatsu Sho Meiji Probio Yogurt LG21 Teishibo Meiji Nyugyo' NIHON SHOKURYO SHINBUN 26 February 2007, page 185, XP003018278**
• **HORIUCHI K. ET AL.: 'Datsu Sanso Teion Hakkoho'ni yoru Shinki na Yogurt no Kaihatsu' NOGYO SUISAN GIJUTSU KENKYU JOURNAL vol. 30, no. 2, 01 February 2007, pages 8 - 11, XP003018279**

Remarks:
The file contains technical information submitted after the application was filed and not included in this specification

EP 2 011 401 B2

**Description**

**[Technical field]**

The present invention relates to fermented milk containing milk solids-not-fat (hereafter, referred to as SNF) at a concentration higher than usual and/or milk fat at a concentration lower than usual, and to a production process thereof.

**[Background art]**

Fermented milk is a commonly consumed food product and is well known to be a healthy food. However, from the viewpoint of healthy food, due to growing interest in diet, demand for low-calorie fermentedmilkcontaining less fat hasbeen increasing because standard fermented milk contains approximately 3wt% milk fat. Accordingly, a number of fermented-milk products advocating a low-fat feature have been provided in the market in recent years. However, because milk fat has a significant influence on goodmilk flavor and texture provided by the fermented milk, it is necessary to compensate or improve such good milk flavor and texture which are inevitably decreased by reducing the milk fat content in the fermented milk.

Most of the methods to achieve such improvement involve addition of low-calorie additives to replace milk fat, and agar and gelatin are mainly used as alternatives. These alternatives are used for providing "smooth texture," so that "mild texture" including reduced sour taste that is artificially achieved by milk fat is a replacement. Therefore, these methods do not compensate for the deterioration of milk flavor, in particular the lack of "rich taste (body)," which accompanies reduction of milk fat. Since this lack of "rich taste (body) " has an especially great influence on the deterioration of milk flavor, there are many reports on milk-flavoring agents which are added to the above mentioned agar and gelatin to enhance milk flavors (for example, patent document 1).

In addition, new health-related functions of fermented milk have been widely publicized recently, including a dieting function and a function to reduce allergy such as hay fever. Regarding the dieting function, there is a report stating that this function is enhanced by taking commercially available fermented milk with addition of nonfat dry milk so as to increase its SNF.

When fermented milk is made to have high SNF by adding nonfat dry milk, a decrease of flavor and texture in the fermented milk is larger than that in fermented milk with a standard SNF content, and it is difficult to maintain its important feature of "palatability" as a food, while solving problems such as bad melt-in-mouth, rough texture, and grainy. In particular, when low-fat fermented milk is made to have high SNF by adding nonfat dry milk, its flavor tends to deteriorate further due to the inevitable decrease of good flavor derived from milk fat. Consequently, when manufacturing high-SNF fermented milk with good flavor and texture, in particular high-SNF fermented milk with good flavor and texture of a low-fat type, a method to effectively improve its flavor and texture has been required.

Generally, to improve flavor and texture of fermented milk, the use of additives such as flavors and polysaccharide thickeners has been widely adopted (for example, patent document 1). However, from the viewpoint of providing food products with more natural health-related functions, such a method wherein the flavor and texture are improved by effects of the additives is not the best method; rather, development of a more natural method to solve the problems without using a technique to artificially improve the flavor by additives has been awaited.

Meanwhile, as a method to provide more delicate texture for fermentedmilk, and to improve hardness of the fermented milk, the inventors of the present invention have clarified a production technique of novel fermented milk wherein fermentation is performed at a lower fermentation temperature of 30°C-37°C (patent document 2), and 38°C-40°C (patent document 3) while decreasing the dissolved oxygen concentration in a fermentation mixture to 5 ppm or less. However, a technique to improve flavor and texture of low-fat fermented milk or high-SNF fermented milk using a natural method has not yet been known. JP2003250482 discloses a flavour enchancer for low-fat yoghurt.

[Patent document 1] JP PATENT No. 3706345
[Patent document 2] JP PATENT No. 3644505
[Patent document 3] JP PATENT No. 3666871

**[Disclosure of the invention]**

**[Problem to be solved by the invention]**

Therefore, the present invention aims to solve the above problems, and to improve the decrease of milk flavor and mild texture (hereinafter, the combination of both the milk flavor and mild texture is referred to as "milk fat taste") caused by reducing the milk fat content and increasing the SNF content by the addition of high concentration of nonfat dry milk, using a more natural method.

**[Means of solving the problem]**

The present inventors devoted themselves to the research to solve the above problems, and found that, with respect to a fermented-milk mixture with reduced milk fat and a fermented-milk mixture with high SNF, by reducing the dissolved oxygen concentration in the mixture and by reducing the fermentation temperature to a temperature lower than usual, fermented milk with clearly improved milk fat taste compared to fermented milk with less fat produced by a standard process can be obtained; and that in such a case, even when the amount of a starter added to the mixture is significantly reduced from a standard amount of addition, fermented milk with similarly improved milk fat taste can be obtained by performing the fermentation at a fermentation temperature lower than usual. As a result of further research based on such findings, the inventors completed the present invention.

Namely, the present invention relates to a process for producing fermented milk as defined in claim 1.

The invention also relates to said production process, wherein the fermentation temperature is between 30°C-40°C.

The invention also relates to said production process, wherein the amount of the starter added to the fermented-milk material mixture is 50%-25% of the standard amount of addition.

The invention also relates to said fermented milk as defined in claim 8, characterized in that it has milk fat taste with a level similar to that of fermented milk produced by a standard process having a milk fat content at least 1wt% higher than that of the inventive fermented milk, without addition of a milk-fat alternative or a milk-flavoring agent.

The present applicant has separately filed the international application (PCT/JP2007/052042), in which fermented milk having a standard amount of SNF and 0. 1wt%-2.0wt% milk fat as well as its production process have been examined. When the invention claimed in said international application is patented, in order to avoid double patenting, if necessary, the following two cases will be excluded from the production process according to the present invention: "in the process for producing fermented milk with a milk fat content of 0.1wt%-2.0wt% and a SNF content less than 11wt%, a case wherein the dissolved oxygen concentration in a fermented-milk material mixture is controlled to 5 ppm or less at the start of the fermentation and the fermentation is performed at 30°C-39°C," and "in the process for producing fermented milk with a milk fat content of 0. 1wt%-2.0wt%. and a SNF content less than 11wt%, a case wherein the dissolved oxygen concentration in a fermented-milk material mixture is controlled to 5 ppm or less at the start of the fermentation, and a starter with the amount 50%-25% of a standard amount of addition is added to the fermented-milk material mixture and the fermentation is performed at 38°C-46°C."

**[Effects of the invention]**

With respect to low-fat fermented milk having a low milk fat content from 0.1wt% to 2.0wt%, the invention has the effects of achieving milk fat taste similar to that of fermented milk having a milk fat content at least 1wt% higher than the above content prepared by a standard process, without addition of milk-fat alternatives or milk flavoring agents. For example, when low-fat fermented milks having a milk fat content of 0.1wt%, 1.0wt% and 2.0wt% are produced by the production process of the invention, each of the fermented milks exhibits milk fat taste with a level equivalent to or greater than that of fermented milks having a milk fat content of 1.1wt%, 2.0wt% and 3.0wt% produced by the standard process, respectively. In particular, in cases of fermented milk having a milk fat content between 1.0wt% and 1. 5wt% produced by the inventive process, the milk fat taste with a level equivalent to or greater than that of standard fermented milk (3wt%) can be obtained without addition of milk-fat alternatives or milk flavoring agents; thus, enhanced label of both "low fat" and "no additives" can be adopted.

Furthermore, since problems occurring due to the addition of nonfat dry milk with an amount higher than usual to fermented milk in order to achieve high SNF, i.e., problems such as 1) bad melt-in-mouth, 2) rough texture, and 3) grainy can be solved by the invention, high-SNF fermented milk which can be a nutritious food having a good nutrient balance of high protein, low fat, high calcium and low calorie can be provided with improved flavor and texture. In particular, with the high-SNF fermented milk having a SNF content of 11wt% or more, the invention enables to improve flavor and texture which are inevitably deteriorated with increasing SNF, without using additives such as flavor improving agents. Thus, according to the invention, delicious high-SNF fermented milk wherein the degree of deterioration in flavor and texture is reduced even at high SNF contents can be provided.

Moreover, in the high-SNF low-fat fermented milk with a SNFcontent of 11wit% or more and a milk fat content of 0.1wt%-2.0wt%, a decrease of flavor and texture which accompanies increasing SNF as well as a decrease of flavor caused by less milk fat can be simultaneously improved. Thus, the invention enables to provide delicious high-SNF low-fat fermented milk wherein decreases of flavor and texture caused by high SNF and low fat are improved even at high SNF and low fat contents.

**[Best mode for carrying out the invention]**

Hereinafter, the present invention will be explained in detail.

Fermented milk in the present invention indicates "fermented milk" defined by the ministerial ordinance relating to ingredients of milk and milk products, which means a paste or liquid product obtained by fermenting milk, etc. using lactic acid bacteria or yeast, which contains a milk solids-not-fat content at a level equivalent to or higher than that of milk, or frozen products thereof. Fermentedmilk is broadly classified into two types. One is a pre-fermentation type, and the other is a post-fermentation type. The former is produced as follows: fermentation and cooling of the fermented milk is completed in a tank, then the fermented milk is crushed and filled into individual containers for distribution. The latter is produced as follows: a fermented-milk material mixture (hereinafter referred to as a mixture or a material mixture) is added.with a predetermined amount of a starter, which is filled into individual containers for distribution such as paper containers, and then fermented in a fermentation chamber until lactic-acid acidity reaches a predetermined level so that it is solidified into a pudding-like state, followed by cooling. The pre-fermentation is commonly used for producing fruit yogurt with fruit flesh, drinking yogurt and the like, while the post-fermentation is commonly used for producing yogurt of so-called hard-type and plain-type, and the like.

With either fermentation type, a starter is added to a sterilized mixture at a predetermined temperature, and fermentation is carried out until the acidity reaches a predetermined level in the fermentation process, then the mixture is cooled to terminate the fermentation and obtain the final product. Since the fermentation temperature and fermentation time at this step not only affect the production efficiency of the product but also significantly affect the flavor and quality, it is necessary to set the fermentation temperature and fermentation time appropriately by taking those effects into account.

A material mixture of the invention can be obtained by heating and dissolving raw materials to be used regularly in the production of fermented milk, such as milk, nonfat milk, nonfat dry milk and other milk materials, sugar, saccharides, flavors, water and the like; when milk fat alternatives are used, gelatin solutions, agar solutions and pectin, etc., which have been preliminarily heated and dissolved, are added and mixed to the above mixture. However, in cases of the present invention and when the milk fat content is approximately 1.0wt%-2.0wt%, it is possible to provide products having rich milk fat taste with a level similar to or greater than that of fermented milk having a standard milk fat content (approximately 3wt%) produced by a standard process, without addition of milk fat alternatives; accordingly, a preferable embodiment of the invention is the one wherein gelatin, etc. is not added in the above milk fat content range. Therefore, in cases of the process according to the present invention, the addition of milk fat alternatives and others is practically considered only when "nonfat" products in which milk fat content is 0.5wt% or less are to be produced.

Here, it is possible to control the milk fat content between 0.1wt% and 2.0wt% upon production of fermented milk of the invention, by changing the ratio of blending of raw milk and nonfat dry milk in a mixture. When nonfat dry milk alone which is generally available on the market is used without raw milk, and when SNF content is adjusted to the value of standard fermented milk by residual fat contained in said nonfat dry milk, the milk fat content becomes approximately 0.1wt%.

Thus-obtained material mixture with the adjusted milk fat content is homogenized, sterilized and cooled to a predetermined temperature (fermentation temperature). A process to reduce the dissolved oxygen concentration described later may be performed at this state; however, when the dissolved oxygen concentration is reduced by nitrogen replacement and others, this process of reducing the dissolved oxygen concentration may be omitted here. Next, the material mixture is inoculated with a lactic acid bacteria starter of a standard amount of addition or a smaller amount, and filled into a tank to start fermentation in cases of pre-fermentation, or filled into a separate container for distribution to start fermentation in cases of post-fermentation. After completion of the fermentation, sugar solutions may be added to these mixtures.

As a lactic acid bacteria starter inoculated to mixtures in the invention, one or more strains selected from L. bulgaricus, S. thermophilus, L. lactis, as well as lactic acid bacteria and natural yeasts generally used for the preparation of fermented milk can be used. In the present invention, a starter wherein a mixed starter of L. bulgaricus and S. thermophilus, which are standardized as yogurt starters in accordance with Codex standard, is used as a base can be preferably used. Using this yogurt starter as a base, other lactic acid bacteria such as L. gasseri and Bifidobacterium may be added with consideration given to fermentation temperature and fermentation conditions of the intended fermented milk.

With respect to the fermentation temperature, regardless of amount of milk fat, amount of SNF, and amount of addition of starter, a temperature lower than standard fermentation temperatures, for example 30°C-46°C, may be adopted.

Even under the low fat condition of milk fat content between 0.1wt%-2.0wt%, fermentation can be performed at the above temperature range; however, the range of 30°C-39°C is preferred. In the case of low-fat content, the temperature of 32°C-38°C is especially preferred, and 34°C-37°C is more preferred, from the viewpoint of fermentation temperature and effects of improving milk fat taste.

When fermented-milk mixtures have a standard milk fat content and high SNF (SNF of 11wt% or more), fermentation can be performed at 30°C-46°C; 30°C-40°C is preferred, 32°C-39°C is especially preferred, and 34°C-38°C is furthermore preferred.

When the amount of a starter is reduced, fermentation can be performed at 30°C-46°C; when the amount of a starter is 50%-25% of the standard amount under the fermentation temperature of 38°C-46°C, fermented milk with improved milk fat taste can be obtained. This effect is particularly apparent under the low fat condition of 0.1wt%-2.0wt% milk fat.

In any case, it is preferred that the fermentation time is adjusted approximately between 3 h and 7 h, so that the entire fermentation process is completed within a day.

In the case of high-SNF fermented milk with reduced milk fat, when the fermentation temperature of the process according to the invention is too high, milk fat taste tends to decrease compared with fermented milk with a standard milk fat content; in the case of high-SNF fermented milk without reduction of milk fat, the effect of improving milk fat taste may gradually be reduced when the fermentation temperature exceeds 40°C. In the case of fermented milk with a standard SNF content with reduced milk fat, more preferable fermentation temperature is 38°C or less. Similarly, regardless of SNF content, more preferable fermentation temperature is 39°C or less when the milk fat content is not reduced.

With the process according to the invention, there are cases wherein fermentation time is significantly extended with a decrease in the fermentation temperature. At the fermentation temperature less than 30°C, the fermentation time increases due to a significant decrease in the growth rate of lactic acid bacteria compared to the case with the fermentation temperature of 30°C or more. In the case of the process according to the invention, since the degree of a decrease in the growth rate of lactic acid bacteria accompanying a decrease in the fermentation temperature is smaller than that in standard processes, the fermentation temperature can be set at a lower temperature than the standard processes. Meanwhile, when the fermentation temperature is set to be 30°C or more, the fermentation time can be a practical time for industrial mass production conditions. When the process according to the invention is used, the fermentation time is approximately 6 h under the fermentation temperature of 30°C, whereas it is 10-11 h when a standard process is used.

When fermentation time is set, a rough indicator of the end point of fermentation is generally obtained by measuring lactic-acid acidity. For example, in the case of fermented milk with 10wt% SNF, a time point at which the lactic-acid acidity reaches 0.7% is determined to be the end point of fermentation (pH at this time point is 4.4-4.7). However, in the process according to the invention, an indicator other than the lactic-acid acidity is required due to buffering action associated with an increase in SNF. Therefore, instead of lactic-acid acidity, a pH value of the fermented-milk mixture is used as the indicator of the end point of fermentation; when the pH value becomes 4.4-4.7, it is determined to be the end point of fermentation.

As a method to reduce dissolved oxygen concentration in a mixture, any method may be applied including a method of inert gas replacement and a membrane separation process using deoxidized membrane. Important point here is to reduce the dissolved oxygen concentration to 5 ppm or less in the mixture. Among the above methods, because the inert gas replacement can be performed after addition of starters as mentioned above, its level of restriction on the process is small compared with the membrane separation process and others.

A method of inert gas replacement is explained below; replacement may be performed at any time point between the preparation of a material mixture and the start of fermentation after inoculation of a starter. However, since it is important that the mixture is maintained in a state of reduced dissolved oxygen concentration upon start of the fermentation, it is desirable that the inert gas replacement of the mixture is performed between immediately before and immediately after the inoculation of a starter.

According to previous examinations, as the dissolved oxygen concentration in a mixture upon start of fermentation was lowered, better results could be obtained. For example, when the temperature of a mixture is approximately 40°C, the dissolved oxygen concentration is 5 ppm or less, and preferably 3 ppm or less.

When the inert gas replacement is used to reduce dissolved oxygen concentration, nitrogen gas, argon gas, helium gas and others may be used as the inert gas; among them, nitrogen gas may be preferably used as the inert gas for general use in food products. As a method for replacing dissolved oxygen with inert gas, well-known methods may be used, including a method wherein these inert gases are directly bubbled into the mixture, a method to use a static mixer, or a method wherein the gas is introduced into a mixer together with the mixture for agitation.

When a membrane separation process is performed to reduce dissolved oxygen concentration, a hollow fiber membrane (MHF304KM and others, Mitsubishi Rayon Engineering Co., Ltd.) may be used as the deoxidized membrane. It may be used with reference to the instruction of the membrane; the membrane separation process can be performed by applying to the mixture prior to the addition of starters to reduce the dissolved oxygen concentration.

In the invention, both of reducing the fermentation temperature and reducing the amount of starter may be separately combined with a method to reduce dissolved oxygen concentration, or both conditions are combined first then may be combined with a method to reduce dissolved oxygen concentration. However, in order to obtain merits of respective conditions, it is preferable that in terms of process management, each of the conditions is respectively combined with a method to reduce dissolved oxygen concentration.

Next, when the condition of reducing the amount of starter is combined with a method to reduce dissolved oxygen concentration, the amount of a starter that is 50%-25% of the standard condition is used. The fermentation temperature under this condition may be, for example, 30°C-46°C; however, the use of the range of 38°C-46°C is preferred. Under high-temperature conditions, good milk fat taste can be ensured by further reducing the amount of the starter. However, when the temperature exceeds 46°C, it becomes difficult to obtain the effect of improvement of milk fat taste. Under this condition, a preferable temperature condition is 38°C-45°C, and more preferably, it is 39°C-43°C. The merit of adopting this method is to be able to ferment at a standard fermentation temperature; under the standard fermentation temperature, temperature control can be carried out easily as in the case of standard products, and in addition, risk such as contamination can be significantly reduced.

The standard amount of addition of starters, as a criterion for the amount of starters in the invention described above, is determined as the amount of a starter used for a fermented-milk mixture without reducing the dissolved oxygen concentration, that results in the lactic-acid acidity of 0.7% after fermentation at 43°C for 3 h; this standard amount is defined as 100%.

In the present invention, both conditions of reducing the fermentation temperature and reducing the amount of starter are combined then can be possibly used under various conditions (for example, fermentation temperature is set at 34°C and the amount of a starter is 60% of the standard amount). However, this is not recommended because combination becomes complex and merits of each condition may be diluted. For example, with the method of significantly reducing the amount of starters, it is possible to use a starter with an amount 50%-25% of the standard amount under the fermentation temperature from 38°C to 46°C; taking advantage of this merit, it is rational to use the method to reduce the amount of starters in cases when fermentation is performed at a standard temperature such as 40°C or more, not under a low temperature.

In this regard, particularly in the critical region of the respective condition, the product yield obtained under the combination of the two factors (fermentation temperature and amount of starter) can be larger than that under only one factor; accordingly, it becomes inevitable to combine the two conditions . For example, when the fermentation temperature exceeds 39°C, there are cases wherein the temperature condition alone can hardly exhibit improvement of milk fat taste. When the condition of reducing the amount of starter is combined in such cases, the product yield can be increased. Because of these merits, under the condition of reduced starter amount, the applicable fermentation temperature of 38°C or more, which partially overlaps the condition of fermentation temperature alone, is preferred.

With the process according to the invention, fermentation temperature and the amount of starter are determined from the viewpoint of completing the fermentation within a certain period so that the entire fermentation process can be finished within one day. Accordingly, considering the long-term fermentation, there may be cases wherein different temperature ranges and different amounts of starter are used. Basically, it is evident that a technology in which dissolved oxygen concentration in a fermented-milk mixture is 5 ppm or less and fermentation temperature is decreased from a standard fermentation temperature is within the scope of the present invention.

In the present invention, under the condition that dissolved oxygen concentration was adjusted to be 5 ppm or less in a mixture for high-SNF fermented milk by means of various dissolved oxygen reduction methods, when the fermentation was performed at 30°C-40°C for fermented milk with a standard milk fat content, i.e., approximately 3wt%, and at 30°C-39°C for fermented milk with a reducedmilk fat content, then the overall flavor and texture were clearly improved, although the hardness of the fermented milk did not reach the desired level in terms of flavor and texture indicated in patent documents 2 and 3. Therefore, the improvement of flavor and texture achieved by the invention was speculated to be caused by factors different from the formation of dense textures obtained in patent documents 2 and 3.

In general, the SNF content of commercially available fermented milk is approximately 9wt%-10wt% regardless of soft type or hard type. When the SNF content exceeds 11wt%, not that any one of the problems including 1) bad melt-in-mouth, 2) rough texture, and 3) grainy is exposed depending on the SNF content and others, but all of the three problems become obvious. At the point when the SNF content exceeds 11wt%, most of panelists perceive deterioration of flavor and texture. When the SNF content exceeds 12wt%, all panelists clearly perceive deterioration of flavor and texture. In contrast, deterioration of flavor due to a decrease in milk fat content is independent from the above three problems. In cases of low-fat fermented milk, an increase of SNFmay cause some persons to feel an increase of "rich taste (body), " so that the status of flavor deterioration is different from that for the cases wherein SNF content in the fermented milk having a standard milk fat content is increased. Namely, when SNF contents in the fermented milk having a standard milk fat content and in the low-fat fermented milk are increased, the status wherein deterioration of flavor is perceived differs. However, products with application of the inventive process show overall improvement of flavor, compared to products without application of the inventive process, indicating the effects of the process according to the invention in either case.

Even when the high SNF content used in the invention is 20wt% or more, products with application of the inventive process is speculated to show some effects when merchantability is not taken into consideration, compared to products without application of the inventive process. The basis for this speculation is that the effects of the inventive process are clearly observed in the examination with SNF content of 18wit%.

The range of milk fat content within the low-fat range to which the inventive process can be applied is from 0.1wt% to 2.0wt%. Moreover, in the present invention, deterioration of flavor that accompanies high SNF content can be alleviated by reducing the dissolved oxygen concentration in the fermented-milk mixture, in addition to significantly reducing the starter amount.

[Example]

Hereinafter, the process according to the invention is explained in further detail on the basis of examples and test examples; however, the invention is not limited thereto.

[Reference Example 1] Production of low-fat fermented milk using the inventive process (fermentation temperature: 38°C)

A mixture combining 35.7 kg of cow milk, 6.8 kg of nonfat dry milk and 53.5 kg of water was prepared. The mixture composition was calculated with reference to Japanese Standard of Dietetic Information, ver. 5, using the following values: composition of cow milk: 8.8% SNF, 3.8% milk fat; composition of nonfat dry milk: 95.2% SNF, 1.0% milk fat. Next, the prepared mixture was sterilized by heating at 95°C for 5 min, then cooled to 38°C, and inoculated with a 2.0% lactic acid bacteria starter (mixed culture of L. bulgaricus JCM 1002T and S. thermophilus ATCC 19258). Nitrogen gas was introduced and dispersed into this mixture through a pipe to adjust the dissolved oxygen concentration at 5 ppm or less. The resulting mixture was filled into a container, fermented at 38°C until its lactic-acid acidity reached 0.7% (fermentation time: 3 h), then the fermentation was stopped by cooling to 10°C or less to give the final product. The composition of the final product in this case is 10.0% SNF and 1.5% milk fat.

At the same time, a fermented-milk mixture having a standard milk fat content (3.0%) was fermented at 43°C for 3 h as usual, and the resulting fermented milk (control product: Q) was used as a comparative example for the comparison of milk fat taste with the inventive product. As a result, the inventive product showed clearly stronger milk fat taste than the control product.

(Test 1, refer to Table 1)

In each of the examples and test examples, the SNF contents of prepared products containing different milk-fat contents are fixed at 10.0%. Accordingly, the total solid decreases as the milk fat content decreases. For example, while the total solid of the fermented milk with 1.5% milk fat is 11.5%, that of the fermented milk with 0.5% milk fat is 10.5%. However, in these products, the solid equivalent to the decreased milk fat is not compensated by SNF. This is because an increase of SNF generates an effect to compensate body. Thus, the effect of the inventive process obtained in the examples can be evaluated to be clearly given by the inventive process.

The lactic-acid acidity was calculated by titration using 0.1N NaOH with phenolphthalein as an indicator.

[Test 1] Comparison of milk fat taste between inventive low-fat fermented milk and standard product

The production process of Reference Example 1 was applied to fermented-milk mixtures with various milk fat contents so that the fermented milk of the invention was prepared to have a milk fat content of 1.5%, 1.3%, 1.0% or 0.9%; the obtained inventive fermented milk was subjected to a sensory evaluation test by 8 or 9 specialized panelists using a paired comparison method, in comparison to simultaneously prepared fermented milk having a milk fat content of 3.0% produced by a standard fermentation process (conventional process). The evaluation criteria include three items of "smooth texture on the tongue," "mild taste" and "rich taste (body)," as well as "degree of sour taste" as a reference, totaling four items. In particular, results of the "rich taste (body)" were evaluated with priority as sensory evaluation to represent milk fat taste.

Results of the sensory evaluation test showed that in terms of "rich taste (body) " and "smooth texture on the tongue," the inventive fermented milk with 1.0% milk fat content was evaluated as almost equivalent to the standard product. The inventive fermented milks with 1.5% (Table 1) and 1.3% (Table 2) milk fat contents were evaluated as equivalent to the standard product in terms of "smooth texture on the tongue," and as clearly "stronger" than the standard product in terms of "mild taste" and "rich taste (body)." Furthermore, while sour taste tends to be sensed stronger when milk fat content is low in general, the inventive fermented milk showed weak sour taste although its milk fat content was low. Thus, we could confirm that the inventive fermented milk with a milk fat content of 1.0% or more is "delicious low-fat fermented milk" having similar or better milk fat taste than the standard product (milk fat content of 3%).

In Tables below, evaluation scores for P and Q represent evaluation scores calculated by an evaluation method of milk fat taste, which will be described later (same evaluation is applied to Tables 3-5).

[Table 1]

| n=9 | P is stronger | Q is stronger | No difference |
|---|---|---|---|
| Smooth texture on the tongue | 4 | 3 | 2 |
| Mild taste | 7 | 1 | 1 |
| Rich taste (body) | 5 | 1 | 3 |
| Sour taste | 0 | 8 | 1 |
| P: milk fat content: 1.5% (inventive process)<br>Q: milk fat content: 3.0% (conventional process)<br>P's evaluation score = 26.0,<br>Q's evaluation score = 3.5 Overall evaluation of milk fat taste:<br>P can be evaluated as equivalent to or better than Q | | | |

[Table 2]

| n=9 | P is stronger | Q is stronger | No difference |
|---|---|---|---|
| Smooth texture on the tongue | 4 | 3 | 2 |
| Mild taste | 6 | 1 | 2 |
| Rich taste (body) | 6 | 1 | 2 |
| Sour taste | 2 | 5 | 2 |
| P: milk fat content: 1.3% (inventive process)<br>Q: milk fat content: 3.0% (conventional process)<br>P's evaluation score = 23.0,<br>Q's evaluation score = 4.5 Overall evaluation of milk fat taste:<br>P can be evaluated as equivalent to or better than Q | | | |

[Example 2] Production of low-fat fermented milk using the inventive process (starter reduction process)

A production process similar to Reference Example 1 was adopted except that the amount of the lactic acid bacteria starter was 0.8% (40% of the standard amount), and the fermentation temperature was 43°C. Flavor and texture of the obtained product were compared with those of the standard product with 3.0% milk fat (fermented milk by the conventional process); as shown in Table 3, it was confirmed that the inventive product showed milk fat taste similar to that of the standard product with 3.0% milk fat.

[Table 3]

| n=8 | P is stronger | Q is stronger | No difference |
|---|---|---|---|
| Smooth texture on the tongue | 2 | 5 | 1 |
| Mild taste | 3 | 4 | 1 |
| Rich taste (body) | 2 | 3 | 3 |
| Sour taste | 0 | 7 | 1 |
| P: milk fat content: 1.5% (starter reduction process according to the invention)<br>Q: milk fat content: 3.0% (conventional process)<br>P's evaluation score = 14.5,<br>Q's evaluation score = 12.0 Overall evaluation of milk fat taste:<br>P can be evaluated as equivalent to or better than Q | | | |

[Test 2] Sensory evaluation test of standard low-fat fermented milk (milk fat: 1.5%) and nonfat inventive product (milk fat: 0.5%, 0.1%)

When the milk fat content of the inventive fermented milk is 1% or less, evaluation results of a sensory evaluation test relative to fermented milk with a standard milk fat content (3%) maybe one-sided results; therefore, fermented milk with a reduced milk fat content of 1.5% produced by standard fermentation (control product: Q) was compared with inventive fermented milk with a milk fat content of 0.5% or 0.1% by a sensory evaluation test similar to that in Test example 1. Tables 4 and 5 show results obtained. In terms of "rich taste (body)," the inventive fermented milk with 0.5% milk fat content was evaluated to be "stronger" than the standard fermented milk with 1.5% milk fat content (Table 4). In addition, in terms of "rich taste (body), " the inventive fermented milk with 0.1% milk fat content was evaluated to be "similar" to the control product (Table 5). Meanwhile, in terms of "smooth texture on the tongue," both inventive products were equal to or inferior to the control product (Q); these results indicated that in terms of overall milk fat taste considering all evaluation items, the inventive products require examination of addition of milk fat alternatives. However, it was confirmed that the inventive fermented milk shows apparent improvement of milk fat taste even in the region wherein "nonfat" label is possible. Furthermore, the use of the inventive process enables low-fat fermented milk with 0.5% or 0.1% milk fat content to have milk fat taste equivalent to or better than that of fermented milk produced by the standard process, having 1.5% or 1.1% milk fat content, respectively, i.e., at least 1wt% higher milk fat content.

[Table 4]

| n=8 | P is stronger | Q is stronger | No difference |
|---|---|---|---|
| Smooth texture on the tongue | 0 | 8 | 0 |
| Mild taste | 2 | 5 | 1 |
| Rich taste (body) | 5 | 1 | 2 |
| Sour taste | 2 | 5 | 1 |
| P: milk fat content: 0.5% (inventive process)<br>Q: milk fat content: 1.5% (conventional process)<br>P's evaluation score = 14.0,<br>Q's evaluation score = 10.0 Overall evaluation of milk fat taste:<br>P can be evaluated as equivalent to or better than Q | | | |

[Table 5]

| n=8 | P is stronger | Q is stronger | No difference |
|---|---|---|---|
| Smooth texture on the tongue | 3 | 3 | 2 |
| Mild taste | 4 | 3 | 1 |
| Rich taste (body) | 3 | 3 | 2 |
| Sour taste | 0 | 7 | 1 |
| P: milk fat content: 0.1% (inventive process)<br>Q: milk fat content: 1.5% (conventional process)<br>P's evaluation score = 16.5,<br>Q's evaluation score = 8.5 Overall evaluation of milk fat taste:<br>P can be evaluated as equivalent to or better than Q | | | |

[Test 3] Examination of the relationship between fermentation temperature and milk fat taste, etc.

Effects of the fermentation temperature on milk fat taste and product hardness when the milk fat content was 1.5% were investigated. Production of fermented milk was performed in accordance with the production process of Reference Example 1 except that the fermentation temperature and fermentation time were changed, and the obtained inventive products were compared with fermented milk with 3% milk fat produced by standard fermentation. In this examination, the range of the fermentation temperature was set so that fermentation was completed within 7 h. In addition, as examples of applicable products of the invention, we evaluated the applicability of the invention to pre-fermentation type (mainly dessert type) and post-fermentation type (mainly hard type) fermented milks using the hardness of the fermented milk as the indicator. Table 6 shows results.

[Table 6]

| Fermentation temperature (°C) | Evaluation of flavor | Optimal product type |
| --- | --- | --- |
| 40 | Δ | - |
| 39 | ○ | Post-fermentation type |
| 38 | ◎ | Post-fermentation type |
| 37 | ◎ | Post-fermentation type |
| 36 | ◎ | Post-fermentation type |
| 35 | ◎ | Post-fermentation type |
| 34 | ◎ | Post-fermentation type |
| 33 | ◎ | Pre-fermentation type |
| 32 | ◎ | Pre-fermentation type |
| 31 | ◎ | Pre-fermentation type |
| 30 | ◎ | Pre-fermentation type |
| Evaluated products: 1.5% milk fat | | |

Evaluation:

◎ : The inventive product shows better milk fat taste than the standard product (conventional process, 3% milk fat).
○: The inventive product shows milk fat taste equivalent to that of the standard product.
Δ: The inventive product shows body, but is inferior to the standard product in terms of milk fat taste.
Note 1: The fermentation temperature less than 30°C was not evaluated because the fermentation time exceeds 7 h.
Note 2: Product type is mainly evaluated by the hardness (post-fermentation: relatively hard, pre-fermentation: relatively soft)

[Test 4] Examination of the value of milk fat content at which deterioration of flavor is perceived

In order to evaluate applicable product range of the present invention, sensory evaluation tests of standard fermented milk with different milk fat contents were performed. Table 7 shows sensory test results of the standard fermented milk with the standard milk fat content (3.0%) and the reduced milk fat content (2.0%). The results demonstrate that when the milk fat content decreases to 2.0%, evaluation of the fermented milk with 2.0% milk fat content is downgraded in terms of all three evaluation items of "smooth texture on the tongue," "mild taste" and "rich taste (body)," although there were some disagreements in the evaluation of "rich taste (body)." Thus, from the comprehensive viewpoint, since decreases in milk fat taste are clearly perceived as the milk fat content decreases to 2.0%, the applicable product range of the invention is set to be fermented milk with the milk fat content of 2.0% or less.

[Table 7]

| n=8 | Q1 is stronger | Q2 is stronger | No difference |
| --- | --- | --- | --- |
| Smooth texture on the tongue | 8 | 0 | 0 |
| Mild taste | 8 | 0 | 0 |
| Rich taste (body) | 4 | 2 | 2 |
| Sour taste | 2 | 4 | 2 |
| Q1: milk fat content: 3.0% (conventional process) | | | |
| Q2: milk fat content: 2.0% (conventional process) | | | |

According to the Japanese Standard of Dietetic Information, "low-fat" food must be those containing 3 g or less fat per 100 g of the food (milk fat content of 3% or less). In cases of fermented milk however, because standard fermented milk has a fat content of approximately 3%, enhanced label of "low-fat" can be used for products having a fat content of 1.5% or less. The enhanced label of "nonfat" can be used for products having a fat content of 0.5% or less. While the effects of the present invention are prominent in these "low-fat" to "nonfat" regions, the effects can also be clearly confirmed in products with a reduced milk fat content of approximately 2.0%; therefore, the subjects of the invention are not limited to "low-fat" and "nonfat" fermented milk, but the present invention can be applied to products with a fat content of 2.0% or less as fermented milk with a less-than-usual milk fat content. Namely, because the sensory evaluation results showed that when the milk fat content in the fermentedmilk produced by the conventional process was decreased to 2.0% from the standard value of approximately 3%, an apparent decrease in the milk fat taste was perceived (Table 7), it has become clear that the fermented milk to which the inventive process can be applied in order to improve its milk fat taste is the fermented milk having a milk fat content of 2% or less.

[Reference Example 3] Production of high-SNF low-fat fermented milk using the process according to the invention

A mixture combining 36.7 kg of cow milk, 10.1 kg of nonfat dry milk and 51.2 kg of water was prepared. SNF and milk fat contents in the mixture composition were calculated with reference to Japanese Standard of Dietetic Information, ver. 5, using the following values: composition of cow milk: 8.8% SNF, 3.8% milk fat; and composition of nonfat dry milk: 95.2% SNF, 1.0% milk fat. Next, the prepared mixture was sterilized by heating at 95°C for 5 min, then cooled to 38°C, and inoculated with a 2.0% lactic acid bacteria starter (mixed culture of L. bulgaricus JCM 1002T and S. thermophilus ATCC 19258). Nitrogen gas was introduced and dispersed into this mixture through a pipe to adj ust the dissolved oxygen concentration at 5 ppm or less. The resulting mixture was filled into a container, fermented at 38°C until its pH reached 4.6 (fermentation time: 3 h), then the fermentation was stopped by cooling to 10°C or less to give the final product. The composition of the final product in this case is 13.0% SNF and 1.5% milk fat.

[Test 5] Comparison of flavor between inventive high-SNF low-fat fermented milk and standard high-SNF low-fat fermented milk

The inventive fermented milk was prepared in accordance with the production process of Reference Example 3, and it was compared with the fermented milk produced from a simultaneously-prepared fermented-milk mixture with the same composition as in Reference Example 3 and fermented using a standard fermentation process, by means of a sensory evaluation test by 5 specialized panelists using a paired comparison method. Evaluation criteria were "melt-in-mouth" and "smoothness of texture." As a result, in comparison to the fermented milk by the standard process (Q), the fermented milk of the invention (P) was evaluated as "better" by all the 5 specialized panelists for both items (Table 8). Thus, the inventive product was confirmed to be "high-SNF low-fat fermented milk with good flavor" in which demerits of the conventional high-SNF low-fat fermented milk have been improved.

[Table 8]

| n=5 | P is better | Q is better | No difference |
|---|---|---|---|
| Level of melt-in-mouth | 5 | 0 | 0 |
| Smoothness of texture | 5 | 0 | 0 |
| P: Product by the inventive process<br>Q: Product by the conventional process | | | |

[Example 4] Production of standard-fat-content fermented milk using the process according to the invention

A mixture combining 77.2 kg of cow milk, 6.3 kg of nonfat dry milk and 14.5 kg of water was prepared. The mixture composition was calculated with reference to Japanese Standard of Dietetic Information, ver. 5, using the following values: composition of cow milk: 8.8% SNF, 3.8% milk fat; composition of nonfat dry milk: 95.2% SNF, 1.0% milk fat. Next, the prepared mixture was sterilized by heating at 95°C for 5 min, then cooled to 38°C, and inoculated with a 2.0% lactic acid bacteria starter (mixed culture of L. bulgaricus JCM 1002T and S. thermophilus ATCC 19258). Nitrogen gas was introduced and dispersed into this mixture through a pipe to adjust the dissolved oxygen concentration at 5 ppm or less. The resulting mixture was filled into a container, fermented at 38°C until its pH reached 4.6 (fermentation time: 3 h), then the fermentation was stopped by cooling to 10°C or less to give the final product. The composition of the final product in this case is 13.0% SNF and 3.0% milk fat.

[Test 6] Comparison of flavor between inventive high-SNF standard-fat-content fermented milk and standard high-SNF standard-fat-content fermented milk

Fermented milk of the invention was prepared in accordance with the production process of Example 4, and it was compared with the fermented milk produced from a simultaneously-prepared fermented-milk mixture with the same composition as in Example 4 and fermented using a standard fermentation process, by means of a sensory evaluation test by 5 specialized panelists using a paired comparison method. Evaluation criterion was "smoothness of texture." As a result, in comparison to the product of the standard process, the inventive fermented milk was evaluated as "better" by all the 5 specialized panelists for "smoothness of texture." Thus, the product of the invention was confirmed to be "high-SNF fermented milk with good flavor" in which demerits of the conventional high-SNF fermented milk have been improved.

[Test 7] Examination of the relationship between SNF content and sensory evaluation results

Under the condition of the fat content fixed at 4.5%, the flavor was compared between inventive high-SNF high-fatfermented milk and conventional high-SNF high-fat fermented milk at three different SNF contents. At the SNF contents of 18, 16 and 13%, the flavor was compared between two kinds of fermented milk prepared by the inventive process and by the standard process (standard product). Table 9 shows results of the 5-grade sensory evaluation of "mildness" and "sour taste" by 5 specialized panelists. Compared with the fermented milk prepared by the standard process, the fermented milk prepared by the inventive process showed superior results in terms of both "mild texture" and "not sensing very sour taste." In particular, in the case of 18% SNF content which was the highest SNF content in this examination, the inventive product was clearly judged to be superior in flavor and texture compared to the standard product, giving an expectation that even at higher SNF content ranges, the fermented milk produced by the inventive process may exhibit superior results in terms of palatability compared to standard products.

[Table 9]

| SNF(%) | Production process | Mild texture | Sour taste |
|---|---|---|---|
| 18.0 | Inventive process | ◎ | ◎ |
|  | Conventional process | ×× | ○ |
| 16.0 | Inventive process | ○ | ◎ |
|  | Conventional process | ×× | ○ |
| 13.0 | Inventive process | ◎ | ○ |
|  | Conventional process | × | ×× |

Evaluated by 5 panelists

| Grade | Mild texture | Sour taste |
|---|---|---|
| ◎ | Highly mild | Very weakly sour |
| ○ | Mild | Weakly sour |
| Δ | Relatively mild | Sour |
| × | Weakly mild | Strongly sour |
| ×× | Not mild | Very Strongly sour |

As described above, the process according to the invention can effectively suppress decreases of flavor and texture of fermented milk caused by its high SNF and/or low fat content, by means of modifications in the production process without using improving agents of flavor and texture, so that it can provide novel and delicious low-fat fermented milk, high-SNF fermented milk or high-SNF low-fat fermented milk having an unique and natural composition to the market; thus the process of the invention has remarkable effects.

(Evaluation method of milk fat taste)

In the comparison of fermented milk P and fermented milk Q, evaluation may be carried out by comparing evaluation scores calculated as follows: a sensory evaluation test is performed by specialized panelists using a paired comparison method to evaluate items of "smooth texture on the tongue," "mild taste," "rich taste (body)" and "degree of sour taste; " then, based on the number A-L of specialized panelists shown in Table 10, evaluation scores for P and Q are calculated using the calculation formula below. The product with higher score may be evaluated to have stronger milk fat taste.

[Table 10]

|  | P is stronger | Q is stronger | No difference |
|---|---|---|---|
| Smooth texture on the tongue | A | E | I |
| Mild taste | B | F | J |
| Rich taste (body) | C | G | K |
| Degree of sour taste | D | H | L |

(Calculation formula)

P's evaluation score = $(A+I) \times 0.5 + (B+J) \times 1.0 + (C+K) \times 2.0 - (D+L) \times 1.0$

Q's evaluation score = $(E+I) \times 0.5 + (F+J) \times 1.0 + (G+K) \times 2.0 - (H+L) \times 1.0$

**Claims**

1. A process for producing fermented milk with a milk solids-not-fat (hereinafter, referred to as SNF) content of 11 wt% or more and/or a milk fat content of 0.1 wt% - 2.0 wt%,

   wherein the dissolved oxygen concentration in a fermented-milk material mixture is controlled to 5 ppm or less at the start of the fermentation, and a starter is added to the fermented-milk material mixture and the fermentation is performed at 30°C - 46 °C, and
   wherein, when a milk fat content is 0.1 wt% - 2.0 wt%, the amount of the starter added to the fermented-milk material mixture is 50 % - 25 % of the standard amount of addition of a starter, wherein the standard amount of addition of a starter is determined as the amount of a starter used for a fermented-milk mixture without reducing the dissolved oxygen concentration and results in the lactic-acid acidity of 0.7 % after fermentation at 43 °C for 3 h.

2. The production process according to claim 1, wherein the fermented milk is fruit yogurt with fruit flesh, drinking yogurt, hard-type yogurt or plain-type yogurt.

3. The production process according to claim 2, wherein the yogurt is hard-type yogurt.

4. The production process according to any one of claims 1 to 3, wherein the fermented milk has SNF content of 11 wt% or more and a milk fat content of 0.1 wt% - 2.0 wt%.

5. The production process according to any one of claims 1 to 4, wherein the fermentation temperature is between 30 °C - 40 °C.

6. The production process according to any one of claims 1 to 4, wherein the amount of the starter added to the fermented-milk material mixture is 50 % - 25 % of the standard amount of addition of a starter, wherein the standard amount of addition of a starter is determined as the amount of a starter used for a fermented-milk mixture without reducing the dissolved oxygen concentration and results in the lactic-acid acidity of 0.7 % after fermentation at 43 °C for 3 h.

7. The production process according to claim 6, wherein the fermentation temperature is between 38°C - 46 °C.

8. Fermented milk with a SNF content of 11 wt% or more produced by the production process according to any one of claims 1 to 7.

9. The fermented milk according to claim 8, **characterized in that** it has without addition of a milk-fat alternative or a milk-flavoring agent, milk fat taste with a level similar to that of fermented milk which has a milk fat content at least 1 wt% higher than that of said fermented milk and which is produced by a process using a fermented-milk mixture without reducing the dissolved oxygen concentration and resulting in the lactic-acid acidity of 0.7% after fermentation at 43°C for 3 h.

**Patentansprüche**

1. Verfahren zur Herstellung von fermentierter Milch mit einem Gehalt an fettfreier Milchtrockenmasse (nachfolgend als SNF bezeichnet) von 11 Gew% oder mehr und/oder einem Milchfettgehalt von 0,1 Gew% - 2,0 Gew%,

   wobei die Konzentration des gelösten Sauerstoffs in einer Materialmischung für fermentierte Milch so gesteuert wird, dass sie zu Beginn der Fermentation 5 ppm oder weniger beträgt, und der Materialmischung für fermentierte Milch ein Starter zugegeben und die Fermentation bei 30°C - 46°C durchgeführt wird, und
   wobei, wenn ein Milchfettgehalt 0,1 Gew.-% - 2,0 Gew.-% beträgt, die Menge des der Materialmischung für fermentierte Milch zugesetzten Starters 50% - 25% der Standardzugabemenge eines Starters beträgt, wobei die Standardzugabemenge eines Starters bestimmt wird als die Menge eines Starters, die für eine Mischung für fermentierte Milch ohne Reduktion des Gehalts an gelöstem Sauerstoff verwendet wird, und nach Fermentation über einen Zeitraum von 3 h bei 43°C eine Milchsäure-Azidität von 0,7% ergibt.

2. Herstellungsverfahren nach Anspruch 1, wobei es sich bei der fermentierten Milch um Fruchtjoghurt mit Fruchtfleisch, Trinkjoghurt, festen Joghurt oder Naturjoghurt handelt.

3. Herstellungsverfahren nach Anspruch 2, wobei es sich bei dem Joghurt um festen Joghurt handelt.

4. Herstellungsverfahren nach einem der Ansprüche 1 bis 3, bei dem die fermentierte Milch einen SNF-Gehalt von 11 Gew% oder mehr und einen Milchfettgehalt von 0,1 Gew%-2,0 Gew% aufweist.

5. Herstellungsverfahren nach einem der Ansprüche 1 bis 4, bei dem die Fermentationstemperatur 30°C - 40°C beträgt.

6. Herstellungsverfahren nach einem der Ansprüche 1 bis 4, bei dem die Menge des der Materialmischung für fermentierte Milch zugesetzten Starters 50 % bis 25 % der Standardzugabemenge eines Starters beträgt, wobei die Standardzugabemenge eines Starters bestimmt wird als die Menge eines Starters, die für eine Mischung für fermentierte Milch ohne Reduktion des Gehalts an gelöstem Sauerstoff verwendet wird, und nach Fermentation über einen Zeitraum von 3 h bei 43°C eine Milchsäure-Azidität von 0,7% ergibt.

7. Herstellungsverfahren nach Anspruch 6, bei dem die Fermentationstemperatur 38°C - 46°C beträgt.

8. Fermentierte Milch mit einem SNF-Gehalt von 11 Gew% oder mehr, hergestellt durch das Herstellungsverfahren nach einem der Ansprüche 1 bis 7.

9. Fermentierte Milch nach Anspruch 8, **dadurch gekennzeichnet, dass** sie ohne Zugabe einer Alternative für Milchfett oder eines Milcharomastoffes einen Milchfettgeschmack in einer Intensität aufweist ähnlich der von fermentierter Milch, die einen Milchfettgehalt hat, der mindestens 1 Gew% höher ist als der Milchfettgehalt der erfindungsgemäßen fermentierten Milch, und die durch ein Verfahren hergestellt wird, bei dem eine Mischung für fermentierte Milch verwendet wird, ohne die Konzentration des gelösten Sauerstoffs zu reduzieren, und bei dem nach Fermentation über einen Zeitraum von 3 h bei 43°C eine Milchsäure-Azidität von 0,7 % erhalten wird.

**Revendications**

1. Procédé de production de lait fermenté présentant une teneur en matières sèches non grasses laitières (ci-inclus après, désignées par SNF) de 11 % en pds ou plus et/ou une teneur en matières grasses du lait de 0,1 % en pds - 2,0 % en pds,

dans lequel la concentration en oxygène dissous dans un mélange de matériau laitier fermenté est contrôlée à 5 ppm ou moins au départ de la fermentation, et un levain est ajouté au mélange de matériau laitier fermenté et la fermentation est exécutée à 30°C - 46°C, et

dans lequel, quand la teneur en matières grasses du lait est de 0,1 % pds - 2,0 % pds, la quantité du levain ajouté au mélange de matériau laitier fermenté est de 50 % - 25 % de la quantité standard d'addition d'un levain, dans lequel la quantité standard d'addition d'un levain est déterminée par la quantité d'un levain utilisé pour un mélange de lait fermenté sans réduire la concentration en oxygène dissous et résulte en une acidité par l'acide lactique de 0,7 % après fermentation à 43°C durant 3 h.

2. Procédé de production selon la revendication 1, dans lequel le lait fermenté est du yaourt aux fruits avec de la chair de fruit, du yaourt à boire, du yaourt ferme ou du yaourt nature.

3. Procédé de production selon la revendication 2, dans lequel le yaourt est du yaourt ferme.

4. Procédé de production selon l'une quelconque des revendications 1 à 3, dans lequel le lait fermenté présente une teneur en SNF de 11 % en pds ou plus et une teneur en matières grasses du lait de 0,1 % en pds - 2,0 % en pds.

5. Procédé de production selon l'une quelconque des revendications 1 à 4, dans lequel la température de fermentation est comprise entre 30°C - 40°C.

6. Procédé de production selon l'une quelconque des revendications 1 à 4, dans lequel la quantité de levain ajoutée au mélange de matériau laitier fermenté est de 50 % - 25 % de la quantité standard d'addition d'un levain, dans lequel la quantité standard d'addition d'un levain est déterminée comme étant la quantité d'un levain utilisé pour un mélange de lait fermenté sans réduire la concentration en oxygène dissous et qui résulte en acidité par acide lactique de 0,7 % après fermentation à 43°C durant 3 h.

7. Procédé de production selon la revendication 6, dans lequel la température de fermentation est comprise entre 38°C - 46°C.

8. Lait fermenté présentant une teneur en SNF de 11 % en pds ou plus produit par le procédé de production selon l'une quelconque des revendications 1 à 7.

9. Lait fermenté selon la revendication 8, **caractérisé en ce qu'**il présente, sans addition d'alternative à la matière grasse du lait ni d'agent aromatisant du lait, le goût de la matière grasse du lait à un niveau semblable à celui du lait fermenté qui présente une teneur en matières grasses du lait d'au moins 1 % en pds de plus que celle dudit lait fermenté et qui est produit à travers un procédé utilisant un mélange de lait fermenté sans réduire la concentration en oxygène dissous et résultant en une acidité par l'acide lactique de 0,7 % après fermentation à 43°C durant 3 h.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003250482 B
- JP 3706345 B
- JP 3644505 B
- JP 3666871 B
- JP 2007052042 W